# FASCICULE DE BREVET EUROPEEN

(11) **EP 1 246 780 B1**
(45) Date de publication et mention de la délivrance du brevet: **01.12.2004**
(21) Numéro de dépôt: 00981454.2
(22) Date de dépôt: 22.11.2000
(51) Int. Cl.: C03C 23/00, C03C 21/00

(54) **PROCEDE DE TRAITEMENT DE SUBSTRATS EN VERRE ET SUBSTRATS EN VERRE POUR LA REALISATION D'ECRANS DE VISUALISATION**
VERFAHREN ZUR BEHANDLUNG VON GLASSUBSTRATEN UND GLASSUBSTRATEN ZUR HERSTELLUNG VON ANZEIGESCHIRMEN
METHOD FOR TREATING GLASS SUBSTRATES AND GLASS SUBSTRATES FOR PRODUCING DISPLAY SCREENS

(30) Priorité: 22.11.1999 FR 9914676
(43) Date de publication de la demande: 09.10.2002
(73) Titulaire: SAINT-GOBAIN GLASS FRANCE, 92400 Courbevoie (FR)
(72) Inventeur: DUISIT, Géraldine, F-75012 Paris (FR); GAUME, Olivier, F-92300 Levallois Perret (FR); GY, René, F-93140 Bondy (FR)
(74) Mandataire: Muller, René
(86) Numéro de dépôt international: PCT/FR2000/003242
(87) Numéro de publication internationale: WO 2001/038249

(56) Documents cités:
- FR-A- 2 595 091
- US-A- 5 776 844
- US-A- 5 780 371
- US-A- 5 916 656
- PATENT ABSTRACTS OF JAPAN vol. 1998, no. 08, 30 juin 1998 (1998-06-30) & JP 10 067544 A (NISSIN ELECTRIC CO LTD), 10 mars 1998 (1998-03-10)

## Description

L'invention concerne un procédé de traitement de substrats en verre, et plus spécifiquement de feuilles de verre, destinés à être ultérieurement revêtus de couches ou autres revêtements pour la réalisation d'écrans de visualisation.

Les écrans de visualisation concernés par l'invention sont notamment les écrans à plasma de tous types, les écrans à émission de champs (FED), les écrans électroluminescents, les écrans LCD (Liquid Cristal Display) et plus généralement tous les écrans de visualisation dont les substrats en verre vont subir des traitements thermiques au cours de la réalisation de l'écran.

L'invention sera plus particulièrement décrite en référence à la réalisation d'un écran plasma qui se compose essentiellement de deux feuilles de verre. Sur au moins l'une de ces feuilles de verre sont déposés un ou plusieurs réseaux d'électrodes, une couche d'un matériau diélectrique et des couches constituées de matériaux luminophores correspondant par exemple aux couleurs verte, rouge et bleue. Avant d'être assemblées l'une à l'autre, les feuilles de verre reçoivent encore des barrières et des espaceurs dont les fonctions consistent à former une multitude de cellules et au maintien d'une distance entre les deux feuilles de verre.

L'ensemble de ces réalisations d'électrodes, de couches ou encore d'espaceurs s'accompagne de traitements thermiques.

Les compositions de verre habituellement utilisées pour ce type de substrat sont du type silico-sodo-calcique qui, si elles sont utilisées telles quelles, subissent des variations dimensionnelles lors des traitements thermiques évoqués précédemment du fait des températures atteintes qui sont supérieures aux températures de Strain Point desdites compositions.

Ces variations dimensionnelles qui apparaissent sont pour d'autres applications négligeables. Par contre, dans le cas des écrans de visualisation précités, une grande précision dimensionnelle est requise, notamment pour permettre la réalisation de cellules unitaires où se formera un plasma. En effet, les précisions de réalisation de ces cellules ou plus exactement la précision de dépôt des différentes couches précédemment évoquées influe directement sur la qualité de fonctionnement de l'écran. La précision de l'alignement des électrodes et des différents dépôts permet d'améliorer la résolution de l'écran et la qualité de l'image.

Une première exigence concernant ces feuilles de verre est donc une stabilité dimensionnelle durant les différents traitements thermiques que les feuilles de verre subissent lors de la réalisation d'écrans de visualisation.

Des solutions ont déjà été apportées pour améliorer cette stabilité dimensionnelle.

Une première solution déjà proposée consiste à faire subir à la feuille de verre un traitement de "précompaction" ; un tel traitement consiste en un traitement thermique selon un cycle thermique établi en fonction de la composition de verre et des traitements thermiques que les feuilles de verre subiront lors de la réalisation des écrans. Un tel traitement est par exemple réalisé sur des feuilles, réalisées à partir d'une composition de verre du type silico-sodo-calcique, avant d'effectuer les traitements thermiques correspondant à la fabrication de l'écran de visualisation.

Une autre solution également proposée consiste à réaliser des feuilles de verre selon des compositions particulières présentant de hautes valeurs de Strain Point. Les traitements thermiques subis par de telles feuilles de verre conduisent à des variations dimensionnelles réduites par rapport à des compositions de verre de type silico-sodo-calcique plus usuelles.

Une dernière solution, notamment décrite dans les documents W099/13471 et W099/15472 consiste à effectuer une trempe chimique des feuilles de verre du type silico-sodo-calcique usuel par trempage dans un bain alcalin.

Outre la meilleure stabilité dimensionnelle obtenue selon ces documents, cette solution satisfait une seconde exigence concernant l'application des écrans de visualisation, car la trempe chimique effectuée sur les feuilles de verre leur confère des contraintes de compression superficielle renforçant leur propriété de résistance mécanique. En effet, de telles feuilles de verre vont subir énormément de manipulations, jusqu'à la fin du cycle de fabrication des écrans de visualisation, notamment du fait des multiples dépôts qui doivent être effectués. En outre, les feuilles de verre sont sollicitées durant les traitements thermiques liés aux dépôts de couches lors des procédés de fabrication d'écrans de visualisation. Ces sollicitations d'origine thermique donnent lieu à des risques de casses pendant la fabrication qui s'accentuent dès que le fabricant cherche à accélérer les cycles de fabrication et augmenter les cadences de production. Un renforcement des propriétés mécaniques permet ainsi de limiter au maximum les risques de casse desdits substrats en verre. Il apparaît par ailleurs que le renforcement créé lors de la trempe chimique, disparaît après les différents traitements thermiques effectués pour le dépôt des différentes couches.

Actuellement, il se dessine une nouvelle exigence concernant les substrats en verre pour la fabrication d'écrans de visualisation. En effet, l'industrie des écrans de visualisation souhaite fournir des écrans dont l'assemblage des verres ayant été réalisé, et donc l'intégralité des traitements thermiques ayant été réalisée, présente une résistance mécanique suffisante. Les écrans ainsi constitués doivent encore subir diverses manipulations pour effectuer la fin de fabrication et en outre, ils sont également susceptibles de subir des tensions lors de leur utilisation soit de nature accidentelle, soit simplement du fait de leur utilisation ; par exemple les écrans de type FED subissent des tensions créées par la pression atmosphérique qui s'exerce sur la surface du verre. Un autre exemple concerne les écrans plasma qui subissent des sollicitations thermiques dues notamment à des surchauffes du centre de l'écran par rapport aux bords.

Les inventeurs se sont ainsi donnés pour mission, la réalisation de substrats ou feuilles de verre, qui satisfont d'une part aux premières exigences évoquées, à savoir une stabilité dimensionnelle satisfaisante durant les traitements thermiques liés aux dépôts de couches et un renforcement mécanique créé avant lesdits traitements et d'autre part, présentant, après assemblage des feuilles de verre et donc après l'intégralité desdits traitements thermiques, une résistance mécanique satisfaisante.

Ce but a été atteint selon l'invention par un procédé de traitement d'une feuille de verre constituée d'une composition de verre présentant un Strain Point (température correspondant à une viscosité de 10^{14,6} poises) supérieur à 540°C, destinée à la réalisation d'écrans de visualisation, ledit procédé comportant au moins un traitement d'échange ionique sur au moins une partie de la surface de la feuille de verre et un traitement de précompaction.

Le traitement de précompaction est un traitement réalisé à une température inférieure au point de ramollissement dilatométrique. Ce traitement permet de relaxer la structure de sorte qu'elle devienne plus stable durant les cycles thermiques ultérieurs tels que ceux correspondant aux différents dépôts de couches.

Ce traitement est ainsi avantageusement effectué à une viscosité du verre supérieure à 10¹² poises.

De préférence, la feuille de verre présente une résistivité ρ (exprimée en Ohm.cm à 250°C) telle que logρ > 7,5. De telles résistivités sont particulièrement avantageuses dans le cas des écrans de visualisation du fait des tensions électriques élevées qui sont utilisées pour les faire fonctionner.

Avantageusement, et notamment pour obtenir des produits réalisables industriellement, le procédé de traitement est prévu pour s'appliquer à des feuilles de verre obtenues selon le procédé "float".

Selon une première réalisation de l'invention, le traitement de précompaction est combiné au traitement d'échange ionique et ainsi réalisé simultanément, le cycle thermique de l'échange ionique étant adapté pour réaliser une précompaction.

Selon une seconde réalisation de l'invention, le traitement est réalisé en deux étapes successives, la première consistant en une précompaction et la seconde consistant en un échange ionique sur au moins une partie de la surface de la feuille de verre.

Les inventeurs ont en effet su mettre en évidence que le traitement selon l'invention appliqué à des verres présentant un Strain Point supérieur à 540°C permet d'une part de satisfaire les contraintes de stabilité dimensionnelle et en outre confère à la feuille de verre un renforcement mécanique qui subsiste après des cycles thermiques correspondant aux dépôts de couches pour la fabrication d'écrans de visualisation.

Les résultats obtenus selon l'invention sont surprenants ; il était inattendu que le renforcement obtenu par un traitement d'échange ionique sur des verres présentant un Strain Point élevé et une résistivité élevée puisse être suffisant et en outre se conserve (au moins partiellement) après les traitements thermiques correspondant à la fabrication d'écrans de visualisation. En effet, ces propriétés combinées de haute résistivité et de haut Strain Point nécessitent de limiter les concentrations en alcalins dans le verre, ce qui n'est pas favorable à l'échange d'ions dans le verre..

Selon une réalisation préférée de l'invention, le traitement de précompaction est un traitement thermique consistant en un palier d'une durée comprise entre 1 et 200 heures, et avantageusement selon certaines réalisations entre 1 et 20 heures, à une température comprise entre 400 et 660 °C, la température de palier étant atteinte en au moins une heure et de préférence en au moins deux heures et la température étant ensuite redescendue à 90°C en au moins une heure et de préférence en au moins trois heures.

Concernant le traitement d'échange ionique, celui-ci est réalisé selon une première variante par dépôt d'une pâte comportant un sel de potassium et un composé à haut point de fusion tel qu'un réfractaire à base d'alumine ou silice,
ou sulfate ou chlorure, sur au moins une partie de la surface de la feuille de verre. Un tel procédé de renforcement par échange ionique est notamment décrit dans le brevet français FR -A- 2 353 501. Il permet d'être réalisé dans un temps relativement court en ne renforçant que les zones de la feuille de verre qui le nécessitent.

Selon une seconde variante de l'invention, l'échange ionique est réalisé, sur au moins une partie de la feuille de verre, dans un bain contenant au moins un sel de métal alcalin.

De façon préférée, le bain contient un sel de nitrate de potassium fondu pour effectuer un échange sodium/potassium à la surface de la feuille de verre.

De préférence encore, cette trempe chimique, ou échange ionique dans un bain, est effectuée à une température comprise entre 400 et 660 °C et avantageusement supérieure à 480 °C, pendant un temps compris entre 1 et 360 heures et avantageusement inférieur à 200 heures. Avantageusement, la montée en température dans le bain est effectuée en au moins une et de préférence deux heures. Avantageusement aussi, la température du bain est redescendue à 90°C en au moins une et de préférence trois heures.

L'invention propose également un substrat ou feuille de verre présentant des propriétés permettant de l'utiliser pour la fabrication d'écrans de visualisation.

Un tel substrat de verre, avantageusement obtenu selon le procédé "float", selon l'invention est constitué d'une composition de verre présentant un Strain Point supérieur à 540°C et présente, après au moins un traitement thermique destiné au dépôt d'une couche en vue de la fabrication d'un écran de visualisation, une valeur absolue de compaction inférieure à 60 ppm et une performance thermique DT supérieure à 130°C.

La composition de verre présente avantageusement un coefficient de dilatation supérieur à 65.10⁻⁷ K⁻¹. De telles valeurs du coefficient de dilatation favorise notamment les opérations de scellement nécessaires lors de la fabrication d'écrans.

Avantageusement encore, la composition de verre présente une résistivité ρ (exprimée en Ohm.cm à 250 °C) telle que logρ > 7,5. Une telle valeur de résistivité est plus particulièrement adaptée aux tensions élevées qui peuvent exister dans les écrans de visualisation.

La valeur de compaction s'exprime en partie par million (ppm) et correspond à une grandeur illustrant la stabilité dimensionnelle du substrat en verre. Elle est déterminée après un traitement thermique en effectuant le rapport entre la variation dimensionnelle due au traitement thermique, par mesure sur l'échantillon avant et après ledit traitement thermique, et la longueur initiale correspondante mesurée sur le substrat. Le traitement thermique utilisé correspond à un palier de deux heures à 580°C, avec une montée en température de 10°C/min et ensuite une baisse de la température de 5°C/min. Un tel traitement est représentatif d'un, voire de plusieurs traitements thermiques subis par un substrat en verre, pour réaliser un écran de visualisation.
La performance thermique est déterminée par un test thermique de casse de substrats en verre ayant subis un façonnage usuel pour des écrans de visualisation. Ce test est effectué sur huit échantillons qui sont des plaques de verre, dont les dimensions sont 415*415 mm² et présentent une épaisseur de 2.8 mm. Ce test consiste à chauffer par rayonnement une plaque de verre en son centre, tout en maintenant les bords froids. Pour cela, les bords du substrat sont pris en feuillure sous 12,5 mm de largeur dans un encadrement où circule de l'eau à 20°C. Le centre du substrat est chauffé par des résistances à 4°C/min. Les températures du centre et du bord sont enregistrées au moment de la casse. La performance thermique DT du substrat est la différence de températures centre/bord au moment de la casse. Cette performance thermique et le test thermique décrit ci-dessus sont très représentatifs de l'application d'écrans de visualisation. En effet, les fabricants de tels écrans souhaitent améliorer la productivité et pour cela augmenter notamment les vitesses de productions ; cela conduit naturellement à limiter les temps de chauffe et de refroidissement et soumet donc les substrats en verre à des chocs thermiques tout à fait identifiables au test précédemment décrit. En outre, lors de leur utilisation, il apparaît que la zone de visualisation des écrans subit une élévation de température du simple fait de l'utilisation alors que le bord du substrat enchâssé dans un cadre est maintenu à une température plus basse. Le test thermique est donc représentatif à la fois de sollicitations subies par les substrats en verre pendant la fabrication des écrans de visualisation et pendant l'utilisation desdits écrans.

Avantageusement, la composition de verre du substrat selon l'invention comprend les constituants ci-après dans les proportions pondérales suivantes :

| | | | |
|---|---|---|---|
| SiO₂ | 40 | à | 75 % |
| Al₂O₃ | 0 | à | 12 % |
| Na₂O | 0 | à | 9 % |
| K₂O | 3,5 | à | 10 % |
| MgO | 0 | à | 10 % |
| CaO | 2 | à | 11 % |
| SrO | 0 | à | 11 % |
| BaO | 0 | à | 17 % |
| ZrO₂ | 2 | à | 8 % |

Selon une première réalisation préférée de l'invention, la composition de verre du substrat comprend les constituants ci-après dans les proportions pondérales suivantes :

| | |
|---|---|
| SiO₂ | 60,1 % |
| Al₂O₃ | 3,3 % |
| Na₂O | 3,7 % |
| K₂O | 8,5% |
| MgO | 1 % |
| CaO | 5,6% |
| SrO | 10,3% |
| ZrO₂ | 6,9% |

Selon une autre réalisation préféré de l'invention, la composition de verre du substrat comprend les constituants ci-après dans les proportions pondérales suivantes :

| | |
|---|---|
| SiO₂ | 68,3 % |
| Al₂O₃ | 0,7 % |
| Na₂O | 4,6 % |
| K₂O | 5,6 % |
| MgO | 0,1 % |
| CaO | 9,7 % |
| SrO | 6,5 % |
| ZrO₂ | 4,1 % |

D'autres détails et caractéristiques avantageuses de l'invention ressortiront ci-après de la description des mesures comparatives effectuées sur des substrats réalisés selon l'invention et sur d'autres substrats.

Pour réaliser des mesures comparatives, les inventeurs ont tout d'abord choisi deux compositions de verre pour réaliser des substrats, une première conforme à l'invention (composition I), c'est-à-dire présentant un Strain Point élevé, et une seconde (composition II) correspondant à un verre usuel de type silico-sodo-catcique. Le tableau ci-dessous présente le détail de ces compositions (en pourcentage pondéral) et les valeurs de Strain Point :

| | **COMPOSITION I** | **COMPOSITION II** |
|---|---|---|
| SiO₂ | 60,1 % | 71 % |
| Al₂O₃ | 3,3 % | 0,6 % |
| Na₂O | 3,7 % | 13,6 % |
| K₂O | 8,5 % | 0,3 % |
| MgO | 1 % | 4,1 % |
| CaO | 5,6 % | 9,7 % |
| SrO | 10,3 % | 0 % |
| ZrO₂ | 6,9 % | 0 % |
| Strain Point | 602 ° C | 508 °C |

Les essais comparatifs ont consisté à faire des mesures de compaction et de performance thermique DT sur des substrats réalisés à partir des compositions de verre I et II, présentant une épaisseur de 2.8 mm, et ayant subi ou non des traitements de précompaction, de trempe chimique, ou une combinaison d'un traitement de précompaction et d'une trempe chimique. Tous les substrats subissent avant traitement un façonnage équivalent.

Le traitement de précompaction (noté par la suite T.P.) utilisé est défini en fonction de la composition de verre et des traitements thermiques subis ultérieurement. Pour nos essais des traitements de précompaction ont donc été définis de sorte qu'ils soient « stabilisateurs » pour le cycle thermique qui simule les étapes de fabrication d'écrans de visualisation et défini ci-après.

Le traitement de précompaction utilisé pour la composition I est un traitement thermique comportant une montée en 1 heure à 638°C, une première descente en 5 heures à 552 °C et enfin une descente en 3 heures à température ambiante.

Le traitement de précompaction utilisé pour la composition II est un traitement thermique comportant un palier d'une durée de 2 heures à une température de 580°C. Pour ce traitement de précompaction, la montée en température est effectuée à raison de 10 °C/min et ladite température du substrat est ensuite ramenée à 90°C à raison de 5 °C/min.

La trempe chimique (notée par la suite T.C.) est réalisée dans un bain de nitrate de potassium à une température de 490 °C pendant 16 heures.

Les substrats en verre ayant subi aucun, un ou deux de ces traitements sont ensuite soumis à un cycle thermique simulant une ou plusieurs étapes de fabrication d'un écran de visualisation. Ce cycle théorique (que l'on nommera ensuite cycle fabrication) comporte un palier de deux heures à 580°C avec une montée en température de 10°C/min et ensuite une baisse de la température de 5°C/min.

Les différents résultats concernant les valeurs de compaction (exprimées en ppm, avec une incertitude de ± 30 ppm) et les performances thermiques DT (exprimées en °C) sont regroupées dans le tableau qui suit.

La notation « brute » signifie que les substrats n'ont subi ni traitement de précompaction, ni traitement de trempe chimique.

| | SUBSTRAT | Valeur de compaction (ppm) | DT avant cycle fabrication (°C) | DT après cycle fabrication (°C) |
|---|---|---|---|---|
| A | Composition 1 brute | 346 | 125 | - |
| B | Composition I + T.P. | 0 | 80 | - |
| C | Composition I + T.C. | 174 | 275 | 210 |
| D | Composition I + T.P. + T.C. | 27 | 310 | 145 |
| E | Composition II brute | 465 | 110 | - |
| F | Composition II + T.P. | 0 | 100 | - |
| G | Composition II + T.C. | -510 | >320 | - |
| H | Composition II + T.P. + T.C. | -490 | >320 | 75 |
| Avec T.P. : traitement de précompaction T.C. : trempe chimique | | | | |

Les valeurs de compaction sont mesurées après le "cycle fabrication". Les valeurs positives sont des valeurs exprimant une compaction du substrat et les valeurs négatives expriment une dilatation du substrat.

Les valeurs de performance thermique DT, qui n'apparaissent pas, n'ont pas été mesurées, soit parce que le substrat est inacceptable du fait de sa valeur de compaction, soit parce qu'il s'agit de substrats non renforcés.

Ces résultats montrent que le seul substrat satisfaisant une valeur de compaction inférieure à 60 ppm et une performance thermique DT supérieure à 130°C, après le cycle fabrication, est le substrat "D" réalisé à partir de la composition I, qui présente un Strain Point de 602°C et ayant subi un traitement de précompaction suivi d'une trempe chimique.

Les résultats et notamment la comparaison entre les essais "D" et "H" montrent que la stabilité dimensionnelle obtenue selon l'invention est a priori due notamment au choix de compositions de verre présentant des Strain Point élevés.

## Revendications

1. Procédé de traitement d'une feuille de verre constituée d'une composition de verre présentant un Strain Point supérieur à 540°C, destinée à la réalisation d'un écran de visualisation, ***caractérisé en ce qu'il*** comporte au moins un traitement d'échange ionique sur au moins une partie de la surface de la feuille de verre et un traitement de précompaction qui consiste en un traitement thermique réalisé à une température inférieure au point de ramollissement dilatométrique.

2. Procédé selon la revendication 1, ***caractérisé en ce que*** le traitement de précompaction est un traitement thermique réalisé à des températures correspondant à des viscosités du verre supérieures à 10¹² poises.

3. Procédé selon la revendication 1 ou 2, ***caractérisé en ce que*** la composition de verre présente une résistivité ρ telle que logρ > 7,5.

4. Procédé selon la revendication 1 à 3, ***caractérisé en ce que*** les traitements d'échange ionique et de précompaction sont réalisés simultanément.

5. Procédé selon la revendication 1 à *3,* ***caractérisé en ce qu'il*** comporte une première étape de précompaction et une seconde étape consistant en un échange ionique sur au moins une partie de la surface de la feuille de verre.

6. Procédé selon la revendication 5, ***caractérisé en ce que*** l'étape de précompaction est un traitement thermique consistant en un palier d'une durée comprise entre 1 et 20 heures à une température comprise entre 400 et 660 ° C, **en ce que** cette température de palier est atteinte en au moins 1 heure, et **en ce que** la température est ensuite redescendue à 90°C en au moins 1 heure.

7. Procédé selon l'une des revendications précédentes, ***caractérisé en ce que*** l'échange ionique est réalisé par dépôt d'une pâte comportant un sel de potassium et un composé à haut point de fusion, sur au moins une partie de la surface de la feuille de verre.

8. Procédé selon l'une des revendications 1 à 6, ***caractérisé en ce que*** l'échange ionique sur au moins une partie de la feuille de verre est réalisé dans un bain contenant au moins un sel de métal alcalin.

9. Procédé selon la revendication 8, ***caractérisé en ce que*** le bain contient un sel de nitrate de potassium fondu.

10. Procédé selon l'une des revendications 8 ou 9, **caractérisé en ce que** l'échange ionique est effectué à une température comprise entre 400 et 660 °C pendant un temps compris entre 1 et 360 heures.

11. Substrat de verre constitué d'une composition de verre présentant un Strain Point supérieur à 540°C, ***caractérisé en ce que* le** substrat est obtenu à la suite d'au moins un traitement d'échange ionique sur au moins une partie de la surface de la feuille de verre et un traitement de précompaction qui consiste en un traitement thermique réalisé à une température inférieure au point de ramollissement dilatométrique, ***et qu***'après au moins un traitement thermique destiné au dépôt d'une couche en vue de la fabrication d'un écran de visualisation et correspondant à un palier de deux heures à 580°C, avec une montée en température de 10°C/min, puis une baisse de la température de 5°C/min, le substrat présente une valeur absolue de compaction inférieure à 60 ppm et une performance thermique DT supérieure à 130°C.

12. Substrat selon la revendication 11, ***caractérisé en ce que*** la composition de verre présente un coefficient de dilatation supérieur à 65.10⁻⁷ K⁻¹.

13. Substrat selon la revendication 11 ou 12, ***caractérise en ce que*** la composition de verre présente une résistivité p telle que logp > 7,5.

14. Substrat selon l'une des revendications 11 à 13, ***caractérisé en ce que*** la composition de verre comprend les constituants ci-après dans les proportions pondérales suivantes :
| | |
|---|---|
| SiO₂ | 40 - 75 % |
| Al₂O₃ | 0 - 12 % |
| Na₂O | 0 - 9 % |
| K₂O | 3,5 - 10 % |
| MgO | 0 - 10 % |
| CaO | 2 - 11 % |
| SrO | 0 - 11 % |
| BaO | 0 - 17 % |
| ZrO₂ | 2 - 8 % |

15. Substrat selon la revendication 14, ***caractérisé en ce que*** la composition de verre comprend les constituants ci-après dans les proportions pondérales suivantes :
| | |
|---|---|
| SiO₂ | 60,1% |
| Al₂O₃ | 3,3 % |
| Na₂O | 3,7 % |
| K₂O | 8,5 % |
| MgO | 1 % |
| CaO | 5,6 % |
| SrO | 10,3 % |
| ZrO₂ | 6,9 % |

16. Substrat selon la revendication 14, ***caractérisé en ce que*** la composition de verre comprend les constituants ci-après dans les proportions pondérales suivantes :
| | |
|---|---|
| SiO₂ | 68,3 % |
| Al₂O₃ | 0,7 % |
| Na₂O | 4,6 % |
| K₂O | 5,6 % |
| MgO | 0,1 % |
| CaO | 9,7 % |
| SrO | 6, 5 % |
| ZrO₂ | 4,1 % |

## Claims

1. Method of treating a sheet of glass consisting of a composition of glass having a strain point above 540°C, intended for producing a display screen, **characterised in that** it comprises at least one ion exchange treatment on at least part of the surface of the sheet of glass and a precompacting treatment which consists of a heat treatment carried out at a temperature below the dilatometric softening point.

2. Method according to Claim 1, **characterised in that** the precompacting treatment is a heat treatment carried out at temperatures corresponding to viscosities of the glass above 10¹² poise.

3. Method according to Claim 1 or 2, **characterised in that** the composition of the glass has a resistivity p such that logp > 7.5.

4. Method according to Claim 1 to 3, **characterised in that** the ion exchange and precompacting treatments are carried out simultaneously.

5. Method according to Claim 1 to 3, **characterised in that** it comprises a first precompacting step and a second step consisting of an ion exchange over at least part of the surface of the sheet of glass.

6. Method according to Claim 5, **characterised in that** the precompacting step is a heat treatment consisting of a level stage with a duration of between 1 and 20 hours at a temperature of between 400 and 660°C, and **in that** this level temperature is reached in at least 1 hour, and **in that** the temperature is then lowered once again to 90°C in at least 1 hour.

7. Method according to one of the preceding claims, **characterised in that** the ion exchange is carried out by depositing a paste containing a potassium salt and a high melting point compound, over at least part of the surface of the sheet of glass.

8. Method according to one of Claims 1 to 6, **characterised in that** the ion exchange over at least part of the sheet of glass is carried out in a bath containing at least one alkali metal salt.

9. Method according to Claim 8, **characterised in that** the bath contains a bath of molten potassium nitrate.

10. Method according to one of Claims 8 or 9, **characterised in that** the ion exchange is carried out at a temperature of between 400° and 660°C for a time lying between 1 and 360 hours.

11. Glass substrate consisting of a glass composition having a strain point above 540°C, **characterised in that** the substrate is obtained following at least one ion exchange treatment over at least part of the surface of the sheet of glass and a precompacting treatment which consists of a heat treatment carried out at a temperature below the dilatometric softening point, and that, after at least one heat treatment intended for the deposition of a layer with a view to the fabrication of a display screen and corresponding to a level stage of 2 hours at 580°C, with a temperature rise of 10°C/minute, and then a reduction in the temperature of 5°C/minute, the substrate has an absolute compacting value of less than 60 ppm and a thermal performance DT greater than 130°C.

12. Substrate according to Claim 11, **characterised in that** the glass composition has a coefficient of expansion greater than 65.10⁻⁷ K⁻¹.

13. Substrate according to Claim 11 or 12, **characterised in that** the glass composition has a resistivity ρ such that logρ > 7.5.

14. Substrate according to one of Claims 11 to 13, **characterised in that** the glass composition comprises the following constituents in the following proportions by weight:
| | |
|---|---|
| SiO₂ | 40-75% |
| Al₂O₃ | 0-12% |
| Na₂O | 0-9% |
| K₂O | 3.5-10% |
| MgO | 0-10% |
| CaO | 2-11% |
| SrO | 0-11% |
| BaO | 0-17% |
| ZrO₂ | 2-8% |

15. Substrate according to Claim 14, **characterised in that** the glass composition comprises the following constituents in the following proportions by weight:
| | |
|---|---|
| SiO₂ | 60.1% |
| Al₂O₃ | 3.3% |
| Na₂O | 3.7% |
| K₂O | 8.5% |
| MgO | 1% |
| CaO | 5.6% |
| SrO | 10.3% |
| ZrO₂ | 6.9% |

16. Substrate according to Claim 14, **characterised in that** the glass composition comprises the following constituents in the following proportions by weight:
| | |
|---|---|
| SiO₂ | 68.3% |
| Al₂O₃ | 0.7% |
| Na₂O | 4.6% |
| K₂O | 5.6% |
| MgO | 0.1% |
| CaO | 9.7% |
| SrO | 6.5% |
| ZrO₂ | 4.1% |

## Patentansprüche

1. Verfahren zur Behandlung einer Glasscheibe, die aus einer eine untere Kühlungstemperatur von über 540 °C besitzenden Glaszusammensetzung besteht und zur Herstellung eines Bildschirms vorgesehen ist, **dadurch gekennzeichnet, dass** es mindestens einen Ionenaustausch auf wenigstens einem Teil der Oberfläche der Glasscheibe und eine Vorverfestigung, die aus einer bei einer Temperatur von unterhalb der dilatometrischen Erweichungstemperatur durchgeführten Wärmebehandlung besteht, umfasst.

2. Verfahren nach Anspruch 1, **dadurch gekennzeichnet, dass** die Vorverfestigung eine Wärmebehandlung ist, die bei einer Temperatur durchgeführt wird, die einer Viskosität des Glases von über 10¹² Poise entspricht.

3. Verfahren nach Anspruch 1 oder 2, **dadurch gekennzeichnet, dass** der spezifische elektrische Widerstand ρ der Glaszusammensetzung derart ist, dass logρ > 7,5.

4. Verfahren nach Anspruch 1 bis 3, **dadurch gekennzeichnet, dass** Ionenaustausch und Vorverfestigung gleichzeitig durchgeführt werden.

5. Verfahren nach Anspruch 1 bis 3, **dadurch gekennzeichnet, dass** es eine erste Stufe zur Vorverfestigung und eine zweite Stufe umfasst, die aus einem Ionenaustausch auf wenigstens einem Teil der Oberfläche der Glasscheibe besteht.

6. Verfahren nach Anspruch 5, **dadurch gekennzeichnet, dass** die Vorverfestigungsstufe eine Wärmebehandlung ist, die aus dem 1 bis 20 Stunden langen Halten bei einer Temperatur von 400 bis 660 °C besteht, dass die Haltetemperatur in mindestens 1 Stunde erreicht wird, und dass diese Temperatur danach in mindestens 1 Stunde auf 90 °C gesenkt wird.

7. Verfahren nach einem der vorhergehenden Ansprüche, **dadurch gekennzeichnet, dass** der Ionenaustausch durch Aufbringen einer Paste, die ein Kaliumsalz und eine Verbindung mit hohem Schmelzpunkt enthält, auf wenigstens einem Teil der Oberfläche der Glasscheibe durchgeführt wird.

8. Verfahren nach einem der Ansprüche 1 bis 6, **dadurch gekennzeichnet, dass** der Ionenaustausch auf wenigstens einem Teil der Glasscheibe in einem Bad durchgeführt wird, das mindestens ein Alkalimetallsalz enthält.

9. Verfahren nach Anspruch 8, **dadurch gekennzeichnet, dass** das Bad geschmolzenes Kaliumnitrat enthält.

10. Verfahren nach Anspruch 8 oder 9, **dadurch gekennzeichnet, dass** der Ionenaustausch 1 bis 360 Stunden lang bei einer Temperatur von 400 bis 660 °C durchgeführt wird.

11. Glassubstrat, das aus einer Glaszusammensetzung besteht, die eine untere Kühlungstemperatur von über 540 °C besitzt, **dadurch gekennzeichnet, dass** das Substrat nach mindestens einem Ionenaustausch auf wenigstens einem Teil der Oberfläche der Glasscheibe und einer Vorverfestigung, die aus einer bei einer Temperatur von unterhalb der dilatometrischen Erweichungstemperatur durchgeführten Wärmebehandlung besteht, erhalten worden ist, und dass nach mindestens einer Wärmebehandlung, die für das Aufbringen einer Schicht für die Herstellung eines Bildschirms vorgesehen ist und einem zweistündigen Halten bei 580 °C mit einem Temperaturanstieg von 10 °C/min und danach einer Temperatursenkung mit 5 °C/min entspricht, das Substrat einen absoluten Verfestigungswert von unter 60 ppm und eine thermische Leistungsfähigkeit TD von über 130 °C besitzt.

12. Substrat nach Anspruch 11, **dadurch gekennzeichnet, dass** die Glaszusammensetzung einen Wärmeausdehnungskoeffizienten von über 65·10⁻⁷ K⁻¹ besitzt.

13. Substrat nach Anspruch 11 oder 12, **dadurch gekennzeichnet, dass** der spezifische elektrische Widerstand ρ der Glaszusammensetzung derart ist, dass logρ > 7,5.

14. Substrat nach einem der Ansprüche 11 bis 13, **dadurch gekennzeichnet, dass** die Glaszusammensetzung folgende Bestandteile mit den Gewichtsanteilen umfasst:
| | |
|---|---|
| SiO₂ | 40 bis 75 % |
| Al₂O₃ | 0 bis 12 % |
| Na₂O | 0 bis 9 % |
| K₂O | 3,5 bis 10 % |
| MgO | 0 bis 10 % |
| CaO | 2 bis 11 % |
| SrO | 0 bis 11 % |
| BaO | 0 bis 17 % |
| ZrO₂ | 2 bis 8 %. |

15. Substrat nach Anspruch 14, **dadurch gekennzeichnet, dass** die Glaszusammensetzung folgende Bestandteile mit den Gewichtsanteilen umfasst:
| | |
|---|---|
| SiO₂ | 60,1 % |
| Al₂O₃ | 3,3 % |
| Na₂O | 3,7 % |
| K₂O | 8,5 % |
| MgO | 1 % |
| CaO | 5,6 % |
| SrO | 10,3 % |
| ZrO₂ | 6,9 %. |

16. Substrat nach Anspruch 14, **dadurch gekennzeichnet, dass** die Glaszusammensetzung folgende Bestandteile mit den Gewichtsanteilen umfasst:
| | |
|---|---|
| SiO₂ | 68,3 % |
| Al₂O₃ | 0,7 % |
| Na₂O | 4,6 % |
| K₂O | 5,6 % |
| MgO | 0,1 % |
| CaO | 9,7 % |
| SrO | 6,5 % |
| ZrO₂ | 4,1 %. |
